(19) Europäisches Patentamt
European Patent Office
Office européen des brevets

(11) **EP 2 029 980 B1**

(12) **EUROPEAN PATENT SPECIFICATION**

(45) Date of publication and mention
of the grant of the patent:
**20.01.2010 Bulletin 2010/03**

(51) Int Cl.:
*G01J 1/42* (2006.01)     *G01J 1/50* (2006.01)

(21) Application number: **07735017.1**

(86) International application number:
**PCT/IB2007/050638**

(22) Date of filing: **28.02.2007**

(87) International publication number:
**WO 2007/102102 (13.09.2007 Gazette 2007/37)**

(54) **A DEVICE FOR MONITORING EXPOSURE TO RADIATION, USE OF SUCH A DEVICE, AN ARTICLE AND A METHOD FOR MONITORING EXPOSURE TO RADIATION**

VORRICHTUNG ZUR ÜBERWACHUNG EINER STRAHLUNGSAUSSETZUNG, ANWENDUNG EINER SOLCHEN VORRICHTUNG SOWIE ARTIKEL UND VERFAHREN ZUR ÜBERWACHUNG EINER STRAHLUNGSAUSSETZUNG

DISPOSITIF DE SURVEILLANCE DE L'EXPOSITION AU RAYONNEMENT, SON UTILISATION, ARTICLE ET PROCEDE DE SURVEILLANCE DE L'EXPOSITION AU RAYONNEMENT

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.03.2006 EP 06110895**

(43) Date of publication of application:
**04.03.2009 Bulletin 2009/10**

(73) Proprietor: **Koninklijke Philips Electronics N.V.**
**5621 BA Eindhoven (NL)**

(72) Inventors:
• **LUB, Johan**
**NL-5656 AA Eindhoven (NL)**
• **MEIJER, Eduard, J.**
**NL-5656 AA Eindhoven (NL)**

(74) Representative: **Uittenbogaard, Frank**
**Philips**
**Intellectual Property & Standards**
**P.O. Box 220**
**5600 AE Eindhoven (NL)**

(56) References cited:
**EP-B1- 0 276 919      DE-A1- 19 537 048**
**US-A- 4 212 535**

• **DELDEN VAN R A ET AL: "CONTROLLING THE COLOR OF CHOLESTERIC LIQUID-CRYSTALLINE FILMS BY PHOTOIRRADIATION OF A CHIROPTICAL MOLECULAR SWITCH USED AS DOPANT" ADVANCED FUNCTIONAL MATERIALS, WILEY VCH, WIENHEIM, DE, vol. 13, no. 4, April 2003 (2003-04), pages 319-324, XP001145190 ISSN: 1616-301X**
• **BREHMER M ET AL: "LIGHT-INDUCED COLOR CHANGE OF CHOLESTERIC COPOLYMERS" ADVANCED MATERIALS, WILEY VCH, WEINHEIM, DE, vol. 10, no. 17, 1 December 1998 (1998-12-01), pages 1438-1441, XP000790408 ISSN: 0935-9648**

**Description**

The invention relates to a device for monitoring exposure to radiation, in particular to UV-B radiation, use of such a device, an article and a method for monitoring exposure to radiation.

Devices for monitoring cumulative exposure to radiation are known from the prior art. However, known devices are relatively complex and expensive, and comprise a relatively large number of different components and materials. Particularly the relatively high costs of known devices make those devices less attractive to be bought and/or used by end-consumers, for example to monitor overexposure to harmful ultraviolet (UV) light.

Particularly, the short time risk of over-exposure to solar UV irradiation is skin burn and the formation of blisters and serious skin injuries. A long-term danger of sun exposure is the risk of obtaining skin cancer, a disease that is difficult to treat.

It would therefore be interesting to have a simple indicator that shows the cumulative amount of solar UV light to which the skin of a person has been exposed and could warn to stop sun tanning or to protect the skin after a certain dosage of UV-sunlight. Because indication is preferably performed on a daily basis, a cheap and disposable solution is desirable. Furthermore, for convenience, the indicator should be inconspicuous and easy to read out.

It is an object of the present invention to alleviate the above-mentioned problems. Particularly, an object of the invention is to provide a simple, easy to use, relatively cheap device for monitoring radiation exposure.

Delden Van R A Et al in "Controlling the color of cholesteric liquid-crystalline films by photo irradiation of a chiroptical molecular switch used as dopant" . Advanced Functional Materials, Wiley VCH, Wienheim, DE, vol.13, no. 4, April 2003, pages 319-324, ISSN:1616-301X, disclose usage of thin films of a cholesteric mixture of acrylates 2 and 3 doped with the chiroptical molecular switch (M)-trans-1, photo-control of the reflection color between red and green is possible. This doped liquid-crystal (LC) film can be use for photo induced writing, color reading, and photo induced locking (via polymerization) of chiral, optically written information.

Brehmer et al in "Light-induced color change of cholesteric copolymers" Advanced material, Wiley VCH, Weinheim, DE, vol. 10, no. 17, 1 December 1998, pages 1438-1441, ISSN:0935-9648, disclose their objective as to investigate the possibility of using copolymers containing a menthone derivative and solutions of these copolymers in low molar mass liquid crystal mixtures for locally changing the reflection color.

According to an embodiment of the invention, there is provided a device for monitoring exposure to UV-B radiation having a wavelenghth of 320 nm - 290 nm, at least comprising cholesteric liquid crystal material having a photo-isomerisable chiral compound, wherein the device is configured to substantially block transmission of UV-A radiation having a wavelength of 400 nm - 320 nm and to transmit the UV-B radiation to the cholesteric liquid crystal material, such that during use a color change of the liquid crystal material is induced by modification of its light reflection band upon exposure to the UV-B radiation that is to be monitored.

In this way, a sensitive device can be provided for detecting and monitoring exposure to UV-B radiation. The device can be made relatively simple and cheap. This makes the device particularly suitable to be used by end-consumers. The device can be configured to be used as an UV sun light irradiation indicator. In the latter case, UV sunlight can lead to a gradual isomerisation of the photo-isomerisable compound, providing a change of the mentioned reflection band and a resulting color change that can be observed by a user. Also, the device can be made relatively compact, small, easy to handle and use, and portable, in a simple manner.

The application of cholesteric liquid crystal material having a photo-isomerisable compound as such is known from liquid crystal display device manufacture, wherein such material is applied in a color display filter layer. In that case, it is known to irradiate the photo-isomerisable compound until it has acquired a desired color change through isomerisation, and to stop or prevent any further isomerisation.

The present invention is based on the inventive idea that cholesteric liquid crystal material, having a photo-isomerisable compound, can advantageously be used in the monitoring of radiation, for example, to aid users in monitoring overexposure to harmful ultraviolet (UV) light during sun bathing. Contrary to color display filters, in particular, no polymerization, cross-linking and/or other isomerisation-blocking of the photo-isomerisable compound is being realized in a device according to the present invention during use. Therefore, in a device according to the invention, the photo-isomerisable compound, for example a chiral compound, can provide a relatively large operating range to monitor an irradiation dose.

In another embodiment, there is provided an article, such as clothing, a swim suit, a belt, a swimming and/or floating aid, a pair of glasses, a toy, a consumer article, an edible and/or drinkable product, a storage device, a container, a sun tanning product, a tanning apparatus, a lamp, a sun and/or wind screen, a portable article, and/or a parasol, the article comprising at least one device according to the invention. Therefore, above-mentioned advantages can be provided to the article.

Besides, an embodiment of the invention provides a method to monitor exposure to UV-B radiation having a wavelenghth of 320 nm - 290 nm, using a device according to the invention, the method comprising:

- providing at least a cholesteric liquid crystal material having a photo-isomerisable chiral compound;
- positioning the cholesteric liquid crystal material such that at least part of UV-B radiation, to be monitored, can reach at least part of the cholesteric liquid crystal material to modify a light reflection band of the respective cholesteric liquid crystal material part; and
- detecting a color, which depends on the light reflection band of the cholesteric liquid crystal material, for example a color of light reflected by the cholesteric liquid crystal material.

Therefore, the mentioned cholesteric liquid crystal can provide a good visual indication of exposure to the radiation, for example of a cumulative radiation dose. A sunbather can use this method, and can check the color of light reflected by the cholesteric liquid crystal material, regularly to learn the amount of exposure he/she has already received. In case the user observes that the color has changed to such a degree that overexposure to UV light is likely, the user can take precautionary measures to prevent further exposure in time.

Further advantageous embodiments of the invention are described in the dependent claims. These and other aspects of the invention will be apparent from and elucidated with reference to the embodiments described hereafter.

Figure 1 schematically depicts a cross-section of a first embodiment of the invention;
Figure 2A depicts a top view of the device of the first embodiment, in an initial state;
Figure 2B is similar to Fig. 2A, after the device has been exposed to a certain dose of radiation;
Figure 3 is a view similar to Fig. 1, showing a second embodiment of the invention;
Figure 4 is a top view of Fig. 3, wherein a part of a radiation-blocking layer has been removed;
Figure 5 is a top view similar to Fig. 4, of an alternative embodiment;
Figure 6A is a view similar to Fig. 1 of a third embodiment of the invention;
Figure 6B is a view similar to Fig. 6A, after removal of part of the device;
Figures 7A-7D show various embodiments of articles;
Figures 8A-8D depict chemical structural formulae of compounds of a non-limiting example of the invention; and
Figures 9A-9C show non-limiting examples of other chemical structural formulae of compounds that can be used in embodiments of the invention.

In the present application, similar or corresponding features are indicated by similar or corresponding reference signs.

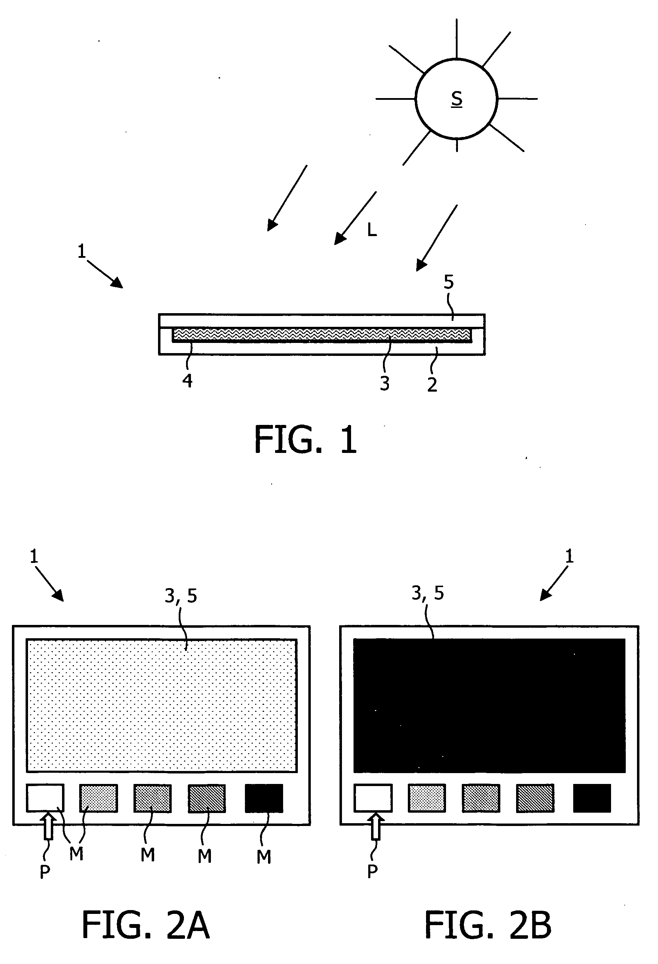

Figures 1-2 show an embodiment of the invention. The Figures show a device 1 for monitoring cumulative exposure to radiation L, for example a dosimetric indicator 1. For example, the radiation can originate from a certain radiation source, for example the sun and/or sky, or a different source. In the present embodiment, the device 1 at least comprises a layer 3, provided with cholesteric liquid crystal material, the layer 3 at least and including a photo-isomerisable chiral compound, such that during use, the layer 3 can be exposed to the radiation L to be monitored, and such that the light reflection band of the cholesteric liquid crystal material 3 is modifiable by the radiation to be monitored. Also, for example, the photo-isomerisable chiral compound can be a compound which is at least photo-isomerisable during normal operating conditions of the device, for example at room temperature (about 20°C) or within a certain temperature range including room temperature.

The present embodiment is particularly configured for the monitoring of exposure to UV light L, for example emanating from the sun S (see Fig. 1), so that a user of the device 1 can keep track of a cumulative dose of UV light irradiation he/she has received from sun light, for example to prevent skin bum and/or UV-light related medical disorders. Figure 2A shows a first colour of the device (substantially white in the drawing), before the cholesteric liquid crystal material has been irradiated by the UV-light L, and Fig. 2B shows the changed colour (dark or black, in the drawing) due to modification of the light reflection band of the cholesteric liquid crystal material 3 upon a certain dose of the UV irradiation. The type of colour change depends on the specific composition of the cholesteric liquid crystal material, as will be clear to the skilled person. For example, the liquid crystal material 3 can be such that the UV irradiation can provide a gradual colour change from blue to red, green to red, or blue to green, and vice-versa, and/or between other colors.

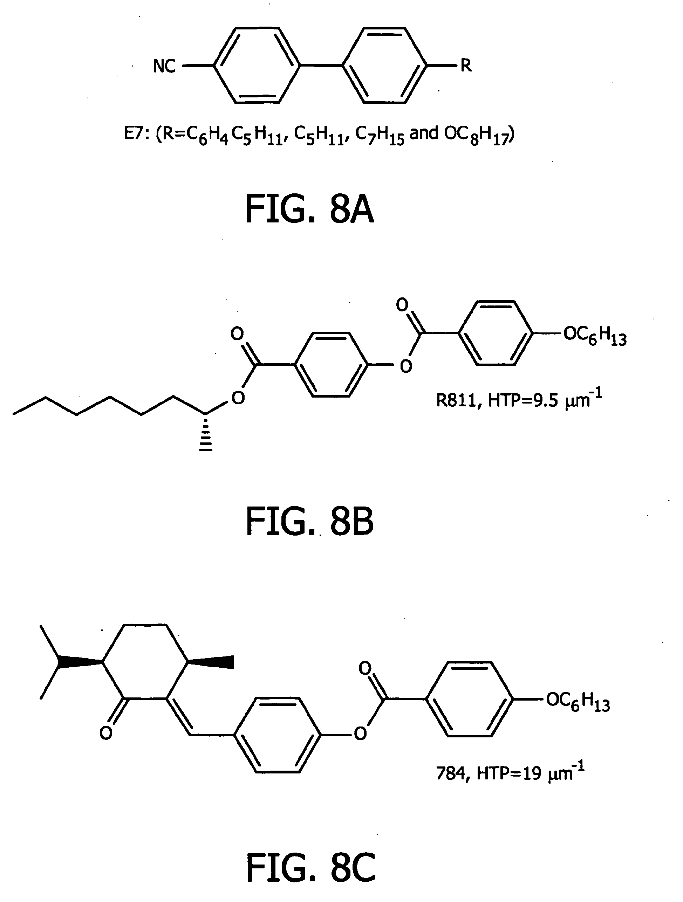

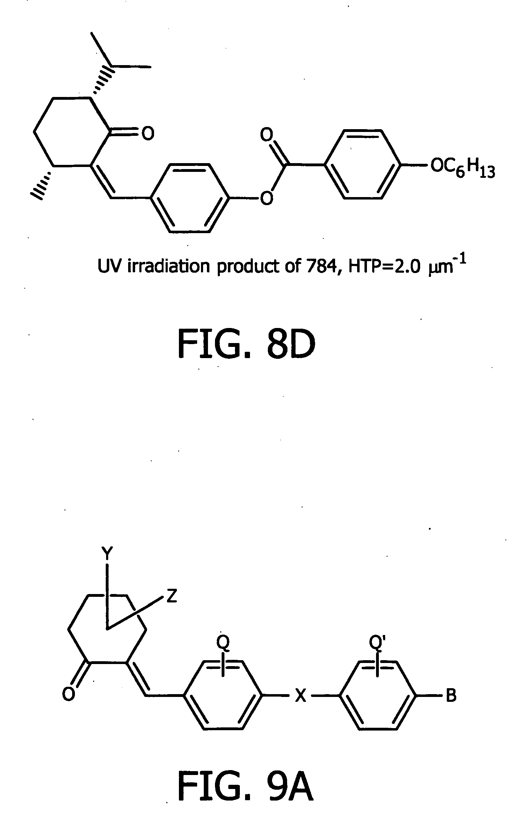

Particularly, the cholesteric liquid crystal material 3 can be a relatively thin cholesteric liquid crystalline layer 3, for example a layer having a thickness of about 2 micron or thicker. The respective cholesteric liquid crystal material can be oriented in such a way that the axis of a molecular helix of the cholesterically ordered material extends transversely to the layer 3. The layer can comprise a layer of a cholesterically ordered material comprising a quantity of a convertible compound, i.e. the photo-isomerable compound. This convertible (photo-isomerable) compound in its non-converted and in its converted state determines the pitch of the cholesterically ordered material to a different extent, in which the conversion of said compound can be induced by the radiation L to be monitored. For example, the cholesteric liquid crystal material 3 can comprises a mixture of nematic liquid crystals provided with a photo-isomerisable chiral compound. Such a mixture will change its reflection colour as a result of irradiation, for example UV irradiation of the sun. Some suitable, non-limiting, examples of the compounds of the liquid crystal material 3 are mentioned below, and are shown in Figures 8-9.

Particularly, in the present embodiment, the liquid crystal material layer 3 is preferably not provided with a compound to abruptly stop a photo-isomerisation process of the mentioned chiral photo-isomerisable compound during use, under normal operating conditions of the device 1, during the monitoring of certain radiation, for example before substantially full isomerisation of the photo-isomerisation compound has been achieved. This is contrary to known cholesteric polymerisable liquid crystal material layers, which are used in the manufacturing of colour filters for display devices, which are usually being polymerized and/or cross-linked after a certain degree of photo-isomerisation of a respective photo-isomerisation compound. Therefore, in the present embodiment, the device 1 is preferably configured such, that the chiral photo-isomerisation compound can be substantially converted upon irradiation by UV (sun) light, for example at least at room temperature. Also, in an embodiment, after a certain dose, the isomerisation of the chiral photo-isomerisable compound can be complete and no further change can be possible upon further, prolonged, irradiation.

In the present embodiment, the device 1 is provided with a carrier or substrate 2 carrying the cholesteric liquid crystal layer 3. The carrier 2 can be configured in various ways and can comprise various materials, for example glass, plastic, PET (Polyethylene Terephthalate) and/or other materials. Preferably, the carrier 2 can cooperate with the cholesteric liquid crystal material to orientate that material in the above-mentioned fashion. For example, the carrier 2 can be provided with an orientation layer to orientate the liquid crystalline layer 3, or the carrier 2 can be aligned by itself (such as carrier comprising PET), as will be clear to the skilled person.

Preferably, the carrier 2 is provided with a reflection-improving surface or layer 4, particularly a dark layer 4, which prevents unwanted reflection from layers below the cholesteric layer 3. The reflection-improving layer 4 can make that light is only reflected by the cholesteric liquid crystal material 3. For example, the reflection layer 4 can include a surface of the carrier 2. Also, the reflection layer and a mentioned orientation layer can be one and the same layer, or can be different layers, for example in case the orientation layer is a transparent layer which extends between a reflection layer and the cholesteric liquid crystal layer 3.

Furthermore, the present embodiment comprises a suitable covering 5, or upper substrate, to cover the cholesteric liquid crystal material 3 at a side faced away from the carrier 2. The covering 5 can be a transparent covering. For example, the covering 5 can be at least partially transparent to radiation to be monitored, to transmit such radiation to the liquid crystal layer 3. Preferably, the covering 5 is substantially transparent to visible light, so that visible light can reach the liquid crystal layer 3 through the covering, and can be at least partly reflected back by the liquid crystal layer 3, which will generally depend on the reflection band of that layer 3. Thus, preferably, the colour of the liquid crystal layer 3 is observable from the outside of the device 1 via the covering 5. Alternatively, the covering 5 can be configured to filter certain parts of the visible part of the spectrum of light, if desired. The covering 5 can also be provided with, or can provide, a suitable orientation layer to orientate the liquid crystalline layer 3. The covering 5 can be made of the same or other material(s) as the mentioned carrier 2. For example, the cholesteric liquid crystal material 3 can be sandwiched between suitable alignment layers (or substrates) 2, 5, can be embedded in suitable compounds 2, 5, can be locked in a relatively small suitable plastic cell 2, 5 , can be embedded in one or more suitable foils 2, 5, and/or can be provided with other suitable alignment materials. Also, as an example, in an embodiment of the invention there can be provided a cholesteric liquid crystal foil as a self-contained radiation dosimetric indicator. Besides, for example, a bottom substrate 2 and top substrate (or covering) 5 can enclose an intermediate liquid crystal layer 3 (as in Fig. 1), and adjoining surfaces of the substrates 2, 5 can be fixed or sealed to each other at in various ways, as will be clear to the skilled person.

In a further embodiment, the device 1 is configured to control, which part of the radiation spectrum can reach the cholesteric liquid crystal material 3. For example, the cholesteric crystal material 3 can be fully embedded in, or be surrounded by, one or more suitable radiation transmission blockers and/or filters.

In a further embodiment, the photo-isomerisable chiral compound is isomerisable by both UV-A light (having a wavelength of 400 nm - 320 nm) and UV-B light (having a wavelength of 320 nm - 290 nm). Also, it can be desired to only monitor cumulative exposure to -for example- the UV-B light. In the latter case, as an example, the covering 5 can comprise UV-A absorbing material, for example one or more suitable dyes and/or coatings, to substantially block transmission of UV-A radiation to the cholesteric liquid crystal material 3. Also, in that case, the covering 5 is preferably configured to transmit at least part of incoming UV-B light to the liquid crystal layer 3. Alternatively, for example, the liquid crystal layer 3 as such can comprise one or more compounds to block of at least partly filter certain parts of the radiation spectrum from incoming radiation L.

In a further embodiment, the device is configured to partially filter the radiation L to be monitored (for example, to filter or absorb part of incoming UV-B radiation), such that the isomerisation of the photo-isomerisable chiral compound can be delayed. Thus, the sensitivity of the device 1 can be adjusted, or be predetermined, in a simple manner. For example, the covering 5 can include suitable material (for example one or more suitable dyes and/or coatings) to absorb part of the incoming radiation L which is to be monitored, and to transmit a remaining part of that radiation to the liquid crystal layer 3. Again, alternatively, the liquid crystal layer 3 as such can be provided with suitable radiation absorbers for that aim.

Moreover, the carrier 2 and/or the reflection layer 4 can be configured to at least partly absorb or block one or more parts of the spectrum of incoming radiation, so that radiation L to be monitored can substantially only reach the liquid crystal layer 3 via the opposite top substrate or covering 5, as will be clear to the skilled person. However, this is not necessary, as alternatively, the device 1 can be configured such that radiation L to be monitored can also reach the liquid crystal layer 3 via the bottom substrate or carrier 2.

As is depicted in Fig. 2A, the device 1 can also be provided with a colour indicator and/or marker M, to indicate and/or mark at least one colour relating to the reflection band of the cholesteric liquid crystal material, for example: at least an initial colour of the cholesteric liquid crystal material before modification of its reflection band by the radiation to be monitored, and/or at least a final colour of the cholesteric liquid crystal material after its reflection band has been substantially maximally modified by the radiation to be monitored. For example, the colour indicator and/or marker M can be provided by an array of colors, preferably stable colors, such as printed colors, (see Fig. 2), being calibrated with respect of the light reflection band of the cholesteric liquid crystal material 3, to indicate a cumulative dose of radiation, received by the device during use, in relation to a colour change due to modification of the light reflection band of the cholesteric liquid crystal material 3. In a further embodiment, an adjustable indicator or pointer P is provided, which can be used to indicate a specific colour of the array of colors M. The device 1 can also be provided with information (not shown) regarding a predetermined relation between the printed colour array M and a respective cumulative dose of irradiation. For example, such a relation can have been determined empirically, and can have been printed on the device 1, and/or be provided in a manual and/or packaging (not shown) of the device. Besides, such information can include messages such as "low dose", "medium dose", "high dose", "danger" and/or comparable messages.

Figures 1-2 show the use of the cholesteric liquid crystal material 3. During use, a user (not shown) can carry, can be provided with and/or can be spatially located with respect to the cholesteric liquid crystal material 3, or the device 1 respectively, particularly to monitor exposure of the user to radiation of the sun. The device 1 can be oriented such, that the cholesteric liquid crystal layer 3 receives part of the sun light L, which is being transmitted though the covering layer 5. In the present embodiment, the transmitted UV-radiation modifies the light reflection band of the cholesteric liquid crystal material 3, leading to the colour change of the material shown in Figures 2A and 2B. In a particular embodiment, as follows from the above, only part of the spectrum of the sun light is transmitted to the cholesteric liquid crystal material 3 to induce the colour change, for example only the UV-B part of the spectrum, wherein remaining UV-light is substantially being blocked. Besides, as follows from the above, also, at least part of such UV-B light can be absorbed by the device 1 before that part can lead to conversion of cholesteric liquid crystal material 3, for example in case the device's sensitivity is modified using suitable radiation absorbers which absorb part of incoming UV-B light.

During the monitoring, the user can detect a colour, which depends on the light reflection band of the cholesteric liquid crystal material, for example a colour of light reflected by the cholesteric liquid crystal material. The detected colour can be compared with at least one predetermined colour, for example with a colour, which indicates a certain threshold cumulative dose of radiation. In a further embodiment, the cholesteric liquid crystal material can change its light reflection band over at least 100 nm upon irradiation by the radiation to be monitored, for example to change a colour of that material between blue and red, between green and red, or between blue and green.

Preferably, before use, a user of the device 1 compares the colour provided by the liquid crystal material 3 with the (preferably printed) array of colors M, and selects or marks which of the array of colors M comes nearest to that cholesteric liquid crystal material colour. For example, the user can remember the selected colour of the colour array, and/or tag that colour, for example with the adjustable indicator P, with ink and/or in a different manner.

Then, after selecting, remembering and/or tagging the initial colour, the user can orient the device 1 towards the sun light, so that sun light can reach the liquid crystal layer 3 and can induce the photo-isomerisation process in that layer 3, leading to a changing reflection band of the layer 3. The user can then start comparing the colour of the liquid crystal layer 3 with the colour array M at suitable times. In this way, the user can obtain relatively accurate information concerning a cumulative dose of radiation he/she is has already received. The radiation induced colour change of the liquid crystal layer 3 can 'tell' the user, when the radiation dose reaches a certain danger level, for example via the colour array M and optional respective information (as mentioned above).

Therefore, the device 1 provides a simple indicator 1, that can show the cumulative amount of solar UV- light to which the skin of a person has been exposed and than can warn to stop sun tanning or to protect the skin after a certain dosage of UV-sunlight. The device 1 can be made cheap and disposable. Furthermore, the device 1 can be convenient, for example inconspicuous and easy to read out.

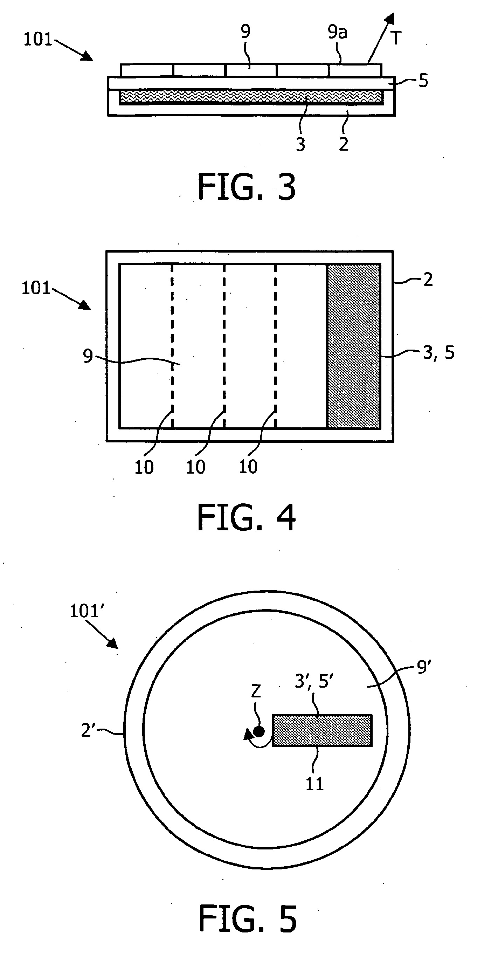

Figures 3-4 show a second embodiment 101, which differs from the embodiment shown in Fig. 1-2 in that the device 101 comprises a radiation blocker 9 which is at least movable from a first position to block transmission of the radiation L to be monitored to a certain surface area of the cholesteric liquid crystal material 3, to a second position to allow that surface area of the cholesteric liquid material to be irradiated by the radiation, or by at least part of that radiation. For example, the radiation blocker 9 can comprise a radiation-blocking layer or foil 9, which extends over the covering layer 5, and which is at least partly removable from the covering layer 5. The radiation blocker 9 can prevent discoloration of underlying liquid crystal material 3. In Fig. 3, for example, the radiation blocker 9 extends over the covering layer 5, to substantially block transmission of radiation to all parts of underlying cholesteric liquid crystal material 3. Removal of a part or section 9a of the blocker 9 is indicated by an arrow T in Fig. 3. Fig. 4 shows the device 101, wherein part (9a) of the blocking layer has been removed from the device 101, such that a respective underlying part of the liquid crystal material 3 can be irradiated, for radiation monitoring purposes. For example, a radiation-blocking layer 9 can be divided into a plurality of sections, which sections can be separated and removed from each other. As an example, the blocking layer 9 can be provided with weakening lines 10, for example perforation lines and/or incised lines, which extend between the sections of that layer 9 to allow a mentioned separation of a respective radiation blocking section from a remaining part of that layer 9, during removal of that section from the device 101. The radiation blocker 9 can be attached to the device 101 in various ways, for example using a suitable adhesive or suitable sticking means, and can comprise various materials, as will be clear to the skilled person.

Alternatively, for example, the radiation blocker 9 can be a covering part, which can slide and/or rotate over, or with respect to, underlying liquid crystal material 3, to subsequently use different parts of the liquid crystal material 3 to monitor radiation. An example of such an embodiment is depicted in Fig. 5, wherein a blocker 9' is rotatable with respect to underlying liquid crystal material 3' (and covering layer 5'), for example around a rotation axis Z, and comprises a window or opening 11 to allow transmission of radiation to part of the liquid crystal material 3'.

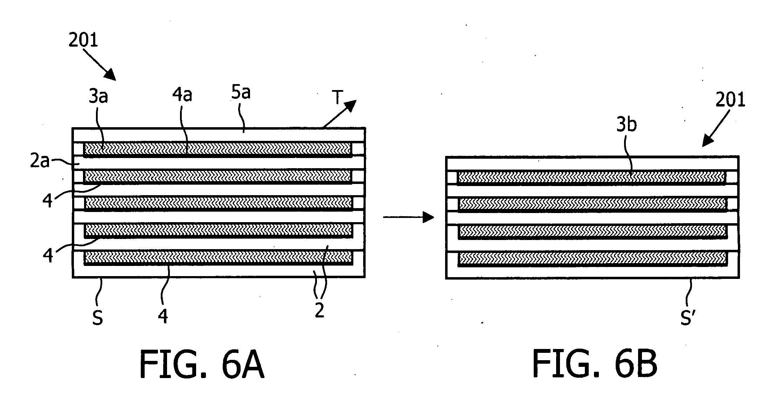

Figures 6A-6B show a third embodiment, which differs from the embodiment shown in Fig. 1-2 in that the device 201 comprises at least one stack S of mentioned cholesteric liquid crystal materials 3, the cholesteric liquid crystal materials 3 being at least partly removable from each other, the stack S also comprising radiation blockers 2, 4 extending between the cholesteric liquid crystal materials 3, each radiation blocker 2, 4 being opaque to radiation to be monitored. For example, in the present embodiment, above-mentioned reflection layers 4 and/or carriers 2 can serve as radiation blockers as well. In the present embodiment, during use, stack parts can be removed and disposed of, after having been irradiated by radiation to be monitored, wherein underlying stack parts become available for use. For example, removal of an upper stack part, comprising a top covering layer 5a, a respective liquid crystal layer 3a and substrate 2a, is indicated by arrow T in Fig. 6A. A resulting stack S', after removal of the top stack portion, is shown in Fig. 6B. In the resulting stack S', a next, fresh, liquid crystal layer 3b is available be irradiated by the radiation. Therefore, each time a user wants to start anew with the sensor device 201, the user simply can remove one of the stack parts from the stack, to expose a fresh sensor portion to radiation to be monitored.

Also in the embodiment of Fig. 6, removable connection between various stack portions can be achieved in several ways, for example by removably attaching a substrate layer of one stack part and a covering layer of a subsequent stack part to each other using suitable adhesive or suitable sticking means, or by attacking subsequent stack portions to each other using tearable or breakable bonding parts, removable foils, and/or weakening lines, perforation lines and/or incised lines, or in a different manner, as will be clear to the skilled person. Besides, for example, the stack can comprise stack portions that are loosely stacked onto each other, and that can be held by a suitable stack holder, container or other suitable holding device.

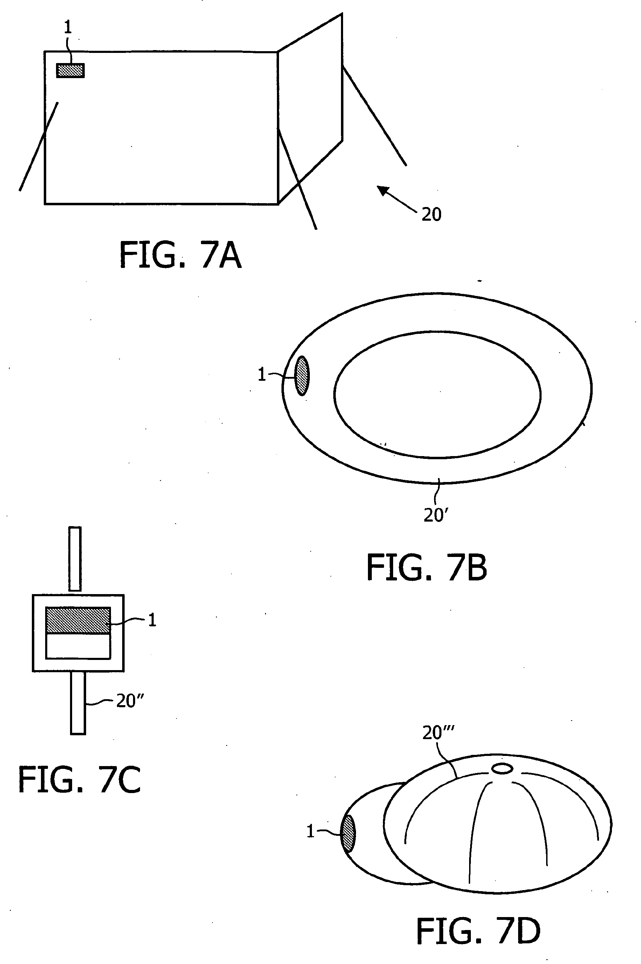

Figures 7A-7D show various examples of articles 20, provided with devices 1 according to the invention. Herein, each device 1 can be configured similar to the embodiments shown in Figures 1-6, or in a different manner. For example the respective article can be clothing (for example a cap or hat, as is shown in Fig. 6D), a swim suit, a belt (see Fig. 6C, for example an arm belt, wrist belt, a strap), a swimming and/or floating aid (see Fig. 6B), a pair of glasses, a toy, a consumer article, an edible and/or drinkable product, a storage device, a container, a sun tanning product, a tanning apparatus, a lamp, a sun and/or wind screen (see Fig. 6A), a portable article, and/or a parasol, or a different article. In an embodiment, the device 1 can be provided with means to removably attach and/or position the device 1 on the respective article or a body part or skin of a user, for example with a clamp, clip, strap, suitable adhesive or a sticking part, and/or other coupling means.

The mentioned liquid crystal material 3 can comprise various compounds, as will be clear to the skilled person. As has been mentioned above, cholesteric liquid crystal materials 3 having a photo-isomerisable chiral compound as such are known from liquid crystal display device manufacture. Examples of cholesteric liquid crystal materials are described in US 6,459,847 B1, US 6,723,479 B2 and US 6,597,856 B2, the contents of which patents are deemed to be incorporated in the present patent application by reference in their entireties. Various compounds as such, mentioned in there patents can also be applied in the present invention, as will be clear to the skilled person (see also the examples mentioned below).

Particularly, in a cholesterically ordered liquid crystal material, a periodicity of a cholesteric phase can be influenced, in particular by UV irradiation. When the periodicity matches the wavelength of (visible) light entering the cholesteric layer the light will be reflected. In particular this latter phenomenon can advantageously be used in a device 1 according to the present invention, as mentioned above.

Particularly, in the present embodiments, the liquid crystal material layer 3 is substantially not provided with a compound to stop a photo-isomerisation process of the mentioned chiral photo-isomerisation compound, such as a compound that would induce polymerization and/or cross-linking of the liquid crystal material layer 3 under normal operating conditions of the device 1 during the monitoring of certain radiation. In a preferred embodiment, the liquid crystal material 3 is configured such that the material 3 does substantially not cross-link and does substantially not polymerize upon being irradiated by UV light, particularly by UV-B light, under normal monitoring conditions, such as at room temperature and/or within a certain temperature range including room temperature.

Example

Figures 8A-8D depict an example of compounds that can be used in the present invention. The compounds are: E7 (nematic molecules derived from cyanobiphenyl, sold by Merck), depicted in Fig. 8A, R811 (Merck) which is depicted in Fig. 8B, and Philips 784-p which serves as the photo-isomerisable chiral compound, having a formula which is shown in Fig. 8C. Philips 784-p as such is known, for example, from the publications: Lub, J.: Ten Hoeve, W.; Nijssen, W. P. M.; Wegh, R. T. "The effect of substituents on the helical twisting power of aldol condensation products ofmenthone", Liquid Crystals (2002), 29(1), 71-77: Van de Witte, Peter; Brehmer, Martin; Lub, Johan, "LCD components obtained by patterning of chiral nematic polymer layers", Journal of Materials Chemistry (1999), 9(9), 2087-2094; van de Witte, Peter; Neuteboom, Edda E.; Brehmer, Martin; Lub, Johan, "Modification of the twist angle in chiral nematic polymer films by photoisomerization of the chiral dopant", Journal of Applied Physics (1999), 85(11), 7517-7521; and Van de Witte, Peter; Galan, Juan Carlos; Lub, Johan, "Modification of the pitch of chiral nematic liquid crystals by means of photoisomerization of chiral dopants" Liquid Crystals (1998), 24(6), 819-827, which publications are deemed to be incorporated in the present application by reference in their entireties.

Figure 8D depicts the structural formula of the irradiation product, or E-Z photo-isomerisation product, of the 784. A mentioned crystal liquid layer 3, for application in a device 1 according to the invention, has been provided by a mixture of the compounds E7, R811 and 784-p. Herein, colour changes for blue to red, green to red, blue to green and vice versa are possible by using the right mixture of liquid crystals. The reflection wavelength of such a layer/mixture can be calculated by the equation 1.1:

$$\lambda = n\left(\sum_i htp_i \bullet x_i\right)^{-1} \qquad\qquad 1$$

Herein, $\lambda$ is the reflection wavelength of the mixture, $htp_i$ is the so called helical twisting power of the respective material, $x_i$ is the fraction of the respective material of the mixture with E7, and n is the refractive index, which has a value of about 1.6 in the present example.

From equation 1, the following equation for the mixture's reflection wavelength $\lambda$ can be obtained:

$$\lambda = n\{htp_{784} \cdot (1-c)x_{784} + htp_{irr} \cdot c \cdot x_{784} + htp_{R811} \cdot x_{R811}\}^{-1} \qquad\qquad 2$$

Herein, c indicates the amount of photo-induced conversion of 784, due to irradiation (in case c=0, none of the 784-p has been converted to its other isomer, and in case c= 1 all of the 784-p has been converted). Upon prolonged irradiation of the mentioned mixture, a photo stationary state can be reached, having a certain c. In case of 784 and sunlight, c can reach a value of 1.

The htps of the mentioned compounds are known. $Htp_{784}$ (the htp of 784) is 19 $\mu m^{-1}$, $htp_{irr}$ (the htp of the irradiation product of 784) is 2.0 $\mu m^{-1}$, and $htp_{811}$ (the htp of 811) is 9.5 $\mu m^{-1}$.

With these data, mixtures of the compounds can be made to provide desired colour changes. For example, a mixture of 2.6% of 784, 25% of R811 and 72.4% of E7 will change colour from green to red, upon formation of the photo stationary state, by sun irradiation.

The present materials mixture 3 can undergo a desired colour change upon irradiation by relatively low energy radiation, for example radiation having a wavelength larger than 300 nm. Particularly, the present mixture is sensitive to both UV-A en UV-B radiation. The mentioned compounds of the mixture not form harmful or undesired byproducts during use. During the monitoring, using the present mixture, the liquid crystal material 3 can undergo a clean, environment friendly E-Z isomerisation.

Many other compounds can be used in the present invention, for example to be applied as a mentioned photo-isomerisable chiral compound. For example, photoisomerizable derivatives of stilbene and cinnamate can be applied as photoisomerizable chiral compounds in the cholesteric liquid-crystalline mixture.

Other examples are compounds or derivates or any analogues or variants, similar to 784. An example of the latter compounds or derivates is depicted, by a general structural formula, in Figure 9A. In Fig. 9A, for example, B is (O)p--CoH 2o+1, o being 2-12, p being 0 or 1 or (O)p-(C2H4)oCH3 , o being 0-3, p being 0 or 1; X can be, for example: chemical bond, CH=CH, C2H4, CH2O, OCH2, OCO, CO2; Y can be, for example, CH3 with enatiomeric excess linked to one of the cyclohexamethylene groups; Z can be, for example, CnH2n+1 with n=0-4; and Q and Q' can, for example, be independently selected from H, C1-C3 alkyl, C1-C3 alkoxy, halogen, and CN.

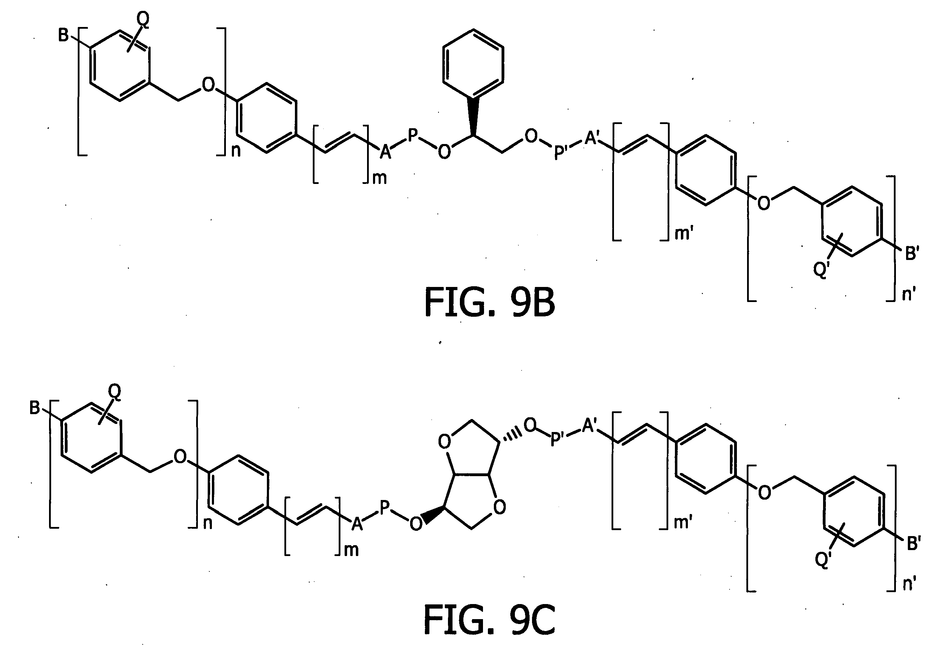

Figure 9B shows an other non-limiting example of derivates of isosorbide and cinnamic acid, depicted by a general structural formula, to be used as a mentioned photo-isomerisable chiral compound. In Fig. 9B, B and B' can for example be independently (O)p-CoH 2o+1, o being 2-12, p being 0 or 1 or (O)p-(C2H4)oCH3 , o being 0-3, p being 0 or 1; A can stand for a bond or a p-phenylene group; P can stand for a CH2 or a C=O group; Q and Q' can be independently selected from H, C1-C3 alkyl, C1-C3 alkoxy, halogen, and CN; and n and n' can be independently integers from 1 to 3; and m, m"=0 or 1 with the restriction that m+m' is 1 or 2.

Besides, Figure 9C shows on other non-limiting example of derivates of phenylethanediol, depicted by a respective structural formula, to be used as a mentioned photo-isomerisable chiral compound. In Fig. 9C, for example, B and B' can be independently (O)p--CoH 2o+1, o being 2-12, p being 0 or 1 or (O)p-(C2H4)oCH3, o being 0-3, p being 0 or 1; A can stand for a bond or a p-phenylene group; P can stand for a CH2 or a C=O group; Q and Q' can be independently selected from H, C1-C3 alkyl, C1-C3 alkoxy, halogen, and CN; and n and n' can be independently integers from 1 to 3; and m, m"=0 or 1 with the restriction that m+m' is 1 or 2.

A basic idea behind the present invention is, that the UV-dose dependency of materials, previously used in cholesteric colour filters for LCD display devices, can be used to make a UV indicator. For example, a the cholesteric liquid crystal material can provide a self-contained radiation dosimeter. The amount of colour change of the cholesteric liquid crystal material 3 can be used as a direct measure for the cumulative exposure to UV irradiation. This means that the material 3 itself has an embedded memory function that stores the previous exposed dose of UV irradiation as a colour. Thus, no separate memory has to be used in the monitoring of cumulative exposure to the radiation. The device 1 can show the cumulative amount of solar UV light to which a skin of a user has been exposed and could warn to stop sun tanning or to protect the skin after a certain dosage of UV-sunlight.

Although the illustrative embodiments of the present invention have been described in greater detail with reference to the accompanying drawings, it will be understood that the invention is not limited to those embodiments. Various changes or modifications may be effected by one skilled in the art without departing from the scope or the spirit of the invention as defined in the claims.

It is to be understood that in the present application, the term "comprising" does not exclude other elements or steps. Also, each of the terms "a" and "an" does not exclude a plurality. Any reference sign(s) in the claims shall not be construed as limiting the scope of the claims.

Claims

1. A device for monitoring exposure to UV-B radiation having a wavelenghth of 320 nm - 290 nm, at least comprising cholesteric liquid crystal material having a photo-isomerisable chiral compound, wherein the device is configured to substantially block transmission of UV-A radiation having a wavelength of 400 nm - 320 nm and to transmit the UV-B radiation to the cholesteric liquid crystal material, such that during use a color change of the liquid crystal material is induced by modification of its light reflection band upon exposure to the UV-B radiation that is to be monitored.

2. A device according to claim 1, wherein the cholesteric liquid crystal material (3) is provided by a cholesteric liquid crystalline layer (3), and is oriented in such a way that the axis of a molecular helix of the cholesterically ordered material extends substantially transversely to the layer (3), wherein the layer comprises a layer of a cholesterically ordered material comprising a quantity of a convertible compound which in its non-converted and in its converted state determines the pitch of the cholesterically ordered material to a different extent, in which the conversion of said compound may be induced by the radiation to be monitored.

3. A device according to any of the preceding claims, comprising a carrier (2) carrying the cholesteric liquid crystal material (3).

4. A device according to any of the preceding claims, comprising a covering (5) to cover the cholesteric liquid crystal material (3), the covering (5) being at least partially transparent to radiation to be monitored.

**5.** A device according to any of the preceding claims, comprising a color indicator and/or marker (M), to indicate and/or mark at least one color relating to the reflection band of the cholesteric liquid crystal material, wherein at least one color being at least an initial color of the cholesteric liquid crystal material before modification of its reflection band by the radiation to be monitored, and/or at least a final color of the cholesteric liquid crystal material after its reflection band has been substantially maximally modified by the radiation to be monitored.

**6.** A device according to any of the preceding claims, comprising an array of colors (M), being calibrated with respect of the light reflection band of the cholesteric liquid crystal material (3), to indicate a dose of radiation, received by the device during use, in relation to a color change due to modification of the light reflection band of the cholesteric liquid crystal material (3).

**7.** A device according to any of the preceding claims, comprising at least one stack (S) of mentioned cholesteric liquid crystal materials (3), the cholesteric liquid crystal materials (3) being at least partly removable from each other, the stack also comprising radiation blockers (2, 4) extending between the cholesteric liquid crystal materials (3), each radiation blocker (2, 4) being opaque to radiation to be monitored.

**8.** A device according to any of the preceding claims, comprising a radiation blocker (9) which is at least movable from a first position to block transmission of the radiation, to be monitored, to a certain surface area of the cholesteric liquid crystal material (3), to a second position to allow the mentioned surface area of the cholesteric liquid material to be irradiated by the radiation.

**9.** An article such as a clothing, a swim suit, a belt, a swimming and/or floating aid, a pair of glasses, a toy, a consumer article, an edible and/or drinkable product, a storage device, a container, a sun tanning product, a tanning apparatus, a lamp, a sun and/or wind screen, a portable article, and/or a parasol, the article comprising at least one device according to any one of the preceding claims.

**10.** A method to monitor exposure to UV-B radiation having a wavelenghth of 320 nm - 290 nm, using a device according to any of claims 1-8, the method comprising:

- providing at least a cholesteric liquid crystal material (3) having a photo-isomerisable chiral compound;
- positioning the cholesteric liquid crystal material such that at least part of the UV-B radiation to be monitored can reach at least part of the cholesteric liquid crystal material to modify a light reflection band of the respective cholesteric liquid crystal material part; and
- detecting a color which depends on the light reflection band of the cholesteric liquid crystal material..

**11.** A method according to claim 10, wherein the detected color, which depends on the light reflection band of the cholesteric liquid crystal material, is being compared with at least one predetermined color, wherein the predetermined color indicates a certain threshold dose of radiation.

**12.** A method according to any of claims 10-11, wherein at least a first part of the cholesteric liquid crystal material is being disposed of after having been irradiated by radiation to be monitored.

**13.** A method according to any of claims 10-12, wherein a user carries, is provided with, and/or is spatially located with respect to the cholesteric liquid crystal material (3), particularly to monitor exposure of the user to radiation of the sun.

**14.** A method according to any of claims 10-12, wherein the cholesteric liquid crystal changes its light reflection band over at least 100 nm upon irradiation by the UV-B radiation to be monitored, wherein the light reflection band changes between blue and red, between green and red, or between blue and green.

**Patentansprüche**

**1.** Vorrichtung zur Überwachung der Einwirkung von UV-B-Strahlung mit einer Wellenlänge von 320 nm - 290 nm, die zumindest cholesterisches Flüssigkristallmaterial mit einer photoisomerisierbaren, chiralen Verbindung umfasst, wobei die Vorrichtung so konfiguriert ist, dass sie Transmission von UV-A-Strahlung mit einer Wellenlänge von 400 nm - 320 nm wesentlich blockiert und die UV-B-Strahlung zu dem cholesterischen Flüssigkristallmaterial durchlässt, so dass bei Verwendung eine Farbänderung des Flüssigkristallmaterials durch Modifizieren seines Lichtreflexionsbandes bei Einwirkung der UV-B-Strahlung, die zu überwachen ist, induziert wird.

**2.** Vorrichtung nach Anspruch 1, wobei das cholesterische Flüssigkristallmaterial (3) durch eine cholesterische, flüssige, kristalline Schicht (3) vorgesehen und so orientiert ist, dass sich die Achse einer molekularen Spirale des cholesterisch geordneten Materials im Wesentlichen quer zu der Schicht (3) erstreckt, wobei die Schicht eine Schicht aus einem cholesterisch geordneten Material mit einer Menge einer umsetzbaren Verbindung umfasst, die in ihrem nicht umgesetzten und in ihrem umgesetzten Zustand den Pitch des cholesterisch geordneten Materials unterschiedlich bestimmt, wobei die Umsetzung der Verbindung durch die zu überwachende Strahlung induziert werden kann.

**3.** Vorrichtung nach einem der vorangegangenen Ansprüche, mit einem das cholesterische Flüssigkristallmaterial (3) tragenden Träger (2).

**4.** Vorrichtung nach einem der vorangegangenen Ansprüche, mit einer Bedeckung (5), um das cholesterische Flüssigkristallmaterial (3) zu bedecken, wobei die Bedeckung (5) für zu überwachende Strahlung zumindest teilweise durchlässig ist.

**5.** Vorrichtung nach einem der vorangegangenen Ansprüche, mit einem Farbindikator und/oder -marker (M), um mindestens eine sich auf das Reflexionsband des cholesterischen Flüssigkristallmaterial beziehende Farbe anzuzeigen und/oder zu markieren, wobei mindestens eine Farbe zumindest eine Ursprungsfarbe des cholesterischen Flüssigkristallmaterials vor Modifizieren des Reflexionsbandes desselben durch die zu überwachende Strahlung und/oder zumindest eine Endfarbe des cholesterischen Flüssigkristallmaterials, nachdem das Reflexionsband desselben durch die zu überwachende Strahlung im Wesentlichen maximal modifiziert wurde, darstellt.

**6.** Vorrichtung nach einem der vorangegangenen Ansprüche, mit einer regelmäßigen Anordnung von Farben (M), die gegenüber dem Lichtreflexionsband des cholesterischen Flüssigkristallmaterials (3) kalibriert sind, um eine während des Einsatzes von der Vorrichtung empfangene Strahlungsdosis in Relation zu einer Farbänderung infolge der Modifizierung des Lichtreflexionsbandes des cholesterischen Flüssigkristallmaterials (3) anzuzeigen.

**7.** Vorrichtung nach einem der vorangegangenen Ansprüche, mit mindestens einem Stapel (S) der erwähnten, cholesterischen Flüssigkristallmaterialien (3), wobei die cholesterischen Flüssigkristallmaterialien (3) zumindest teilweise voneinander entfernbar sind, wobei der Stapel ebenfalls Strahlungsblocker (2, 4) umfasst, die sich zwischen den cholesterischen Flüssigkristallmaterialien (3) erstrecken, wobei jeder Strahlungsblocker (2, 4) für zu überwachende Strahlung opak ist.

**8.** Vorrichtung nach einem der vorangegangenen Ansprüche, mit einem Strahlungsblocker (9), der zumindest teilweise aus einer ersten Position, um eine Transmission der zu überwachenden Strahlung zu einem bestimmten Oberflächenbereich des cholesterischen Flüssigkristallmaterials (3) zu blockieren, in eine zweite Position, um eine Bestrahlung des erwähnten Oberflächenbereichs des cholesterischen Flüssigkristallmaterials durch die Strahlung zu ermöglichen, bewegbar ist.

**9.** Artikel, wie z.B. Kleidung, Badeanzug, Gürtel, Schwimm- und/oder Auftriebshilfe, Brille, Spielzeug, Konsumartikel, essbares und/oder trinkbares Produkt, Speichereinrichtung, Behälter, Sonnenbräunungsprodukt, Bräunungsgerät, Lampe, Sonnen- und/oder Windschutz, portabler Artikel und/oder Sonnenschirm, wobei der Artikel mindestens eine Vorrichtung nach einem der vorangegangenen Ansprüche umfasst.

**10.** Verfahren zur Überwachung der Einwirkung von UV-B-Strahlung mit einer Wellenlänge von 320 nm - 290 nm unter Verwendung einer Vorrichtung nach einem der Ansprüche 1-8, wobei das Verfahren die folgenden Schritte umfasst:

- Vorsehen von zumindest einem cholesterischen Flüssigkristallmaterial (3) mit einer photoisomerisierbaren, chiralen Verbindung;
- Positionieren des cholesterischen Flüssigkristallmaterials dahingehend, dass zumindest ein Teil der zu überwachenden UV-B-Strahlung zumindest einen Teil des cholesterischen Flüssigkristallmaterials erreichen kann, um ein Lichtreflexionsband des jeweiligen cholesterischen Flüssigkristallmaterialteils zu modifizieren; sowie
- Ermitteln einer Farbe, die von dem Lichtreflexionsband des cholesterischen Flüssigkristallmaterials abhängig ist.

**11.** Verfahren nach Anspruch 10, wobei die ermittelte Farbe, die von dem Lichtreflexionsband des cholesterischen Flüssigkristallmaterials abhängig ist, mit mindestens einer vorgegebenen Farbe verglichen wird, wobei die vorgegebene Farbe eine bestimmte Strahlungsschwellenwertdosis anzeigt.

**12.** Verfahren nach einem der Ansprüche 10-11, wobei zumindest ein erster Teil des cholesterischen Flüssigkristallmaterials nach Bestrahlen durch die zu überwachende Strahlung entsorgt wird.

**13.** Verfahren nach einem der Ansprüche 10-12, wobei ein Anwender das cholesterische Flüssigkristallmaterial (3) trägt, mit diesem versehen und/oder gegenüber dem cholesterischen Flüssigkristallmaterial (3) räumlich positioniert ist, insbesondere um die Einwirkung von Strahlung der Sonne auf den Anwender zu überwachen.

**14.** Verfahren nach einem der Ansprüche 10-12, wobei das cholesterische Flüssigkristall bei Bestrahlung durch die zu überwachende UV-B-Strahlung sein Lichtreflexionsband über mindestens 100 nm verändert, wobei das Lichtreflexionsband zwischen Blau und Rot, zwischen Grün und Rot oder zwischen Blau und Grün wechselt.

**Revendications**

**1.** Dispositif de contrôle de l'exposition au rayonnement UV-B ayant une longueur d'onde dans la gamme comprise entre 320 nm et 290 nm, au moins comprenant du matériau cholestérique à cristaux liquides ayant un composé chiral photo-isomérisable, dans lequel le dispositif est configuré de manière à bloquer sensiblement la transmission du rayonnement UV-A ayant une longueur d'onde dans la gamme comprise entre 400 nm et 320 nm et à transmettre le rayonnement UV-B au matériau cholestérique à cristaux liquides de telle façon que, pendant l'utilisation, un changement de couleur du matériau à cristaux liquides soit induit par la modification de sa bande de réflexion de lumière à l'exposition au rayonnement UV-B qui doit être contrôlé.

**2.** Dispositif selon la revendication 1, dans lequel le matériau cholestérique à cristaux liquides (3) est fourni par une couche cholestérique à cristaux liquides (3) et est orienté de telle façon que l'axe d'une hélice moléculaire du matériau cholestériquement ordonné s'étende d'une manière sensiblement transversale à la couche (3), dans lequel la couche comprend une couche d'un matériau cholestériquement ordonné comprenant une quantité d'un composé convertible qui détermine, dans son état non converti et dans son état converti, la hauteur du matériau cholestériquement ordonné dans une mesure différente où la conversion dudit composé peut être induite par le rayonnement à contrôler.

**3.** Dispositif selon l'une quelconque des revendications précédentes 1 à 2, comprenant un support (2) portant le matériau cholestérique à cristaux liquides (3).

**4.** Dispositif selon l'une quelconque des revendications précédentes 1 à 3, comprenant un recouvrement (5) pour couvrir le matériau cholestérique à cristaux liquides (3), le recouvrement (5) étant au moins partiellement transparent au rayonnement à contrôler.

**5.** Dispositif selon l'une quelconque des revendications précédentes 1 à 4, comprenant un indicateur de couleur et/ou un marqueur (M) pour indiquer et/ou pour marquer au moins une couleur ayant rapport à la bande de réflexion du matériau cholestérique à cristaux liquides, dans lequel au moins une couleur est au moins une couleur initiale du matériau cholestérique à cristaux liquides avant la modification de sa bande de réflexion par le rayonnement à contrôler et/ou au moins une couleur finale du matériau cholestérique à cristaux liquides après que sa bande de réflexion a été d'une manière sensiblement maximale modifiée par le rayonnement à contrôler.

**6.** Dispositif selon l'une quelconque des revendications précédentes 1 à 5, comprenant un ensemble de couleurs (M) qui sont étalonnées par rapport à la bande de réflexion de lumière du matériau cholestérique à cristaux liquides (3), pour indiquer une dose de rayonnement qui est reçu par le dispositif pendant l'utilisation, relativement à un changement de couleur du fait de la modification de la bande de réflexion de lumière du matériau cholestérique à cristaux liquides (3).

**7.** Dispositif selon l'une quelconque des revendications précédentes 1 à 6, comprenant au moins une pile (S) de matériaux cholestériques à cristaux liquides (3) mentionnés ci-dessus, les matériaux cholestériques à cristaux liquides (3) étant au moins partiellement amovibles l'un de l'autre, la pile comprenant également des bloqueurs de rayonnement (2, 4) s'étendant entre les matériaux cholestériques à cristaux liquides (3), chaque bloqueur de rayonnement (2, 4) étant opaque au rayonnement à contrôler.

**8.** Dispositif selon l'une quelconque des revendications précédentes 1 à 7, comprenant un bloqueur de rayonnement (9) qui est au moins mobile à partir d'une première position pour bloquer la transmission du rayonnement, qui doit être contrôlé, à une certaine zone de surface du matériau cholestérique à cristaux liquides (3), dans une deuxième position pour permettre que la zone de surface mentionnée ci-dessus du matériau cholestérique à cristaux liquides soit irradiée par le rayonnement.

9. Article, tel que des vêtements, un maillot de bain, une ceinture, une aide de natation et/ou une aide flottante, une paire de lunettes, un jouet, un article de consommation, un produit comestible et/ou potable, un dispositif de stockage, un conteneur, un produit de bronzage, un appareil de bronzage, une lampe, un pare-soleil et/ou un pare-vent, un article portable et/ou un parasol, l'article comprenant au moins un dispositif selon l'une quelconque des revendications précédentes 1 à 8.

10. Procédé de contrôle de l'exposition au rayonnement UV-B ayant une longueur d'onde dans la gamme comprise entre 320 nm et 290 nm, utilisant un dispositif selon l'une quelconque des revendications précédentes 1 à 8, le procédé comprenant les étapes suivantes consistant à :

  - fournir au moins un matériau cholestérique à cristaux liquides (3) ayant un composé chiral photo-isomérisable ;
  - positionner le matériau cholestérique à cristaux liquides de telle façon qu'au moins une partie du rayonnement UV-B à contrôler puisse atteindre au moins une partie du matériau cholestérique à cristaux liquides pour modifier une bande de réflexion de lumière de la partie du matériau cholestérique respectif à cristaux liquides ; et
  - détecter une couleur qui dépend de la bande de réflexion de lumière du matériau cholestérique à cristaux liquides.

11. Procédé selon la revendication 10, dans lequel la couleur détectée qui dépend de la bande de réflexion de lumière du matériau cholestérique à cristaux liquides est comparée à au moins une couleur prédéterminée où la couleur prédéterminée indique une certaine dose de seuil de rayonnement.

12. Procédé selon l'une quelconque des revendications précédentes 10 à 11, dans lequel au moins une première partie du matériau cholestérique à cristaux liquides est débarrassée après avoir été irradiée par le rayonnement à contrôler.

13. Procédé selon l'une quelconque des revendications précédentes 10 à 12, dans lequel un utilisateur porte, est pourvu de et/ou est spatialement situé par rapport au matériau cholestérique à cristaux liquides (3), particulièrement pour contrôler l'exposition de l'utilisateur au rayonnement du soleil.

14. Procédé selon l'une quelconque des revendications précédentes 10 à 12, dans lequel le matériau cholestérique à cristaux liquides change sa bande de réflexion de lumière sur au moins 100 nm à l'irradiation par le rayonnement UV-B à contrôler où la bande de réflexion de lumière change entre le bleu et le rouge, entre le vert et le rouge ou entre le bleu et le vert.

**FIG. 1**

**FIG. 2A**

**FIG. 2B**

101

9    9a    T

5

3    2

## FIG. 3

101

2

9

3, 5

10    10    10

## FIG. 4

101'

9'

3', 5'

Z

2'

11

## FIG. 5

EP 2 029 980 B1

**FIG. 6A**    **FIG. 6B**

FIG. 7A

FIG. 7B

FIG. 7C

FIG. 7D

E7: (R=$C_6H_4C_5H_{11}$, $C_5H_{11}$, $C_7H_{15}$ and $OC_8H_{17}$)

## FIG. 8A

R811, HTP=9.5 $\mu m^{-1}$

## FIG. 8B

784, HTP=19 $\mu m^{-1}$

## FIG. 8C

UV irradiation product of 784, HTP=2.0 $\mu m^{-1}$

# FIG. 8D

# FIG. 9A

FIG. 9B

FIG. 9C

EP 2 029 980 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6459847 B1
- US 6723479 B2
- US 6597856 B2

### Non-patent literature cited in the description

- Controlling the color of cholesteric liquid-crystalline films by photo irradiation of a chiroptical molecular switch used as dopant. **Delden Van R A et al.** Advanced Functional Materials. Wiley VCH, April 2003, vol. 13, 319-324
- Light-induced color change of cholesteric copolymers. **Brehmer et al.** Advanced material. Wiley VCH, 01 December 1998, vol. 10, 1438-1441
- **Lub, J. ; Ten Hoeve, W. ; Nijssen, W. P. M. ; Wegh, R. T.** The effect of substituents on the helical twisting power of aldol condensation products ofmenthone. *Liquid Crystals,* 2002, vol. 29 (1), 71-77
- **Van de Witte, Peter ; Brehmer, Martin ; Lub, Johan.** LCD components obtained by patterning of chiral nematic polymer layers. *Journal of Materials Chemistry,* 1999, vol. 9 (9), 2087-2094
- **van de Witte, Peter ; Neuteboom, Edda E. ; Brehmer, Martin ; Lub, Johan.** Modification of the twist angle in chiral nematic polymer films by photoisomerization of the chiral dopant. *Journal of Applied Physics,* 1999, vol. 85 (11), 7517-7521
- **Van de Witte, Peter ; Galan, Juan Carlos ; Lub, Johan.** Modification of the pitch of chiral nematic liquid crystals by means of photoisomerization of chiral dopants. *Liquid Crystals,* 1998, vol. 24 (6), 819-827